# FASCICULE DE BREVET EUROPEEN

(11) **EP 4 562 284 B1**
(45) Date de publication et mention de la délivrance du brevet: **05.08.2026**
(21) Numéro de dépôt: 23745237.0
(22) Date de dépôt: 22.06.2023
(51) Int. Cl.: F02C 3/10, F02C 6/02, F02C 6/20, F02C 7/268, F02C 7/26, F02C 3/113

(54) **ENSEMBLE PROPULSIF AMÉLIORÉ POUR AÉRONEF HYBRIDÉ MULTIMOTEURS**
VERBESSERTE ANTRIEBSANORDNUNG FÜR EIN HYBRIDFLUGZEUG MIT MEHREREN TRIEBWERKEN
IMPROVED PROPULSION ASSEMBLY FOR MULTI-ENGINE HYBRID AIRCRAFT

(30) Priorité: 27.07.2022 FR 2207741
(43) Date de publication de la demande: 04.06.2025
(73) Titulaire: Safran Helicopter Engines, 64510 Bordes (FR)
(72) Inventeur: THIRIET, Romain, Jean, Gilbert, 77550 MOISSY-CRAMAYEL (FR); BEDRINE, Olivier, 77550 MOISSY-CRAMAYEL (FR)
(74) Mandataire: Cabinet Beau de Loménie
(86) Numéro de dépôt international: PCT/FR2023/050945
(87) Numéro de publication internationale: WO 2024/023413

(56) Documents cités:
- WO-A1-2022/101586
- WO-A1-95/02120
- FR-A1- 3 115 825
- US-A1- 2007 151 258

## Description

### Domaine Technique

La présente invention concerne le domaine des aéronefs hybridés, comprenant au moins deux moteurs tels que des turbomoteurs ou des turbopropulseurs, pour des engins volants tels des hélicoptères ou avions bimoteurs. En particulier, l'invention concerne un ensemble propulsif pour aéronef hybridé multi moteurs, notamment bimoteur, un aéronef hybridé comprenant un tel ensemble propulsif, et un procédé utilisant un tel ensemble propulsif.

### Technique antérieure

De manière connue, une turbomachine, par exemple un turbomoteur, notamment pour un hélicoptère, comporte une turbine à gaz ayant un générateur de gaz et une turbine libre entraînée en rotation par le flux de gaz généré par le générateur de gaz.

Traditionnellement, le générateur de gaz comporte au moins un compresseur et une turbine couplés en rotation. Le principe de fonctionnement est le suivant : l'air frais entrant dans la turbine à gaz est comprimé du fait de la rotation du compresseur avant d'être envoyé vers une chambre de combustion où il est mélangé à un carburant. Les gaz brûlés du fait de la combustion sont ensuite évacués à grande vitesse. Il se produit alors une première détente dans la turbine du générateur de gaz, durant laquelle cette dernière extrait l'énergie nécessaire à l'entraînement du compresseur. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, tel le rotor de l'hélicoptère.

Certains aéronefs comportent deux turbomachines ou plus, comprenant chacune une turbine à gaz telle que décrite ci-dessus. C'est le cas notamment des hélicoptères bimoteurs ou multi moteurs. De tels aéronefs permettent un fonctionnement en mode SEO (pour « Single Engine Operative » en anglais). Le mode SEO est un mode de fonctionnement d'une architecture bimoteur dans lequel une des turbines à gaz est volontairement arrêtée, l'autre assurant l'intégralité de la fourniture de puissance. Ce mode permet d'optimiser la consommation spécifique, qui diminue avec la puissance fournie par une turbomachine. En effet, la consommation spécifique d'une turbine diminuant avec la puissance fournie, il est en effet préférable de fournir 100% de la puissance avec une turbine, plutôt que 50% par chacune d'entre elle.

Un des points critiques du mode SEO réside dans la capacité à rallumer la turbine arrêtée en cas de perte de puissance de la turbine en fonctionnement. Afin d'assurer un redémarrage le plus rapide possible, il est possible de maintenir la turbine arrêtée en mode veille (ou « super ralenti »), c'est-à-dire de continuer à faire tourner son générateur de gaz au moyen exclusif d'une machine électrique, sans apport de carburant. Le générateur étant alors maintenu dans sa « fenêtre d'allumage » (typiquement 10-30% de la vitesse de rotation nominale du générateur de gaz) afin de permettre un allumage immédiat du carburant, soit en mode « super-ralenti » au moyen d'une combustion à un seuil de vitesse faible et assisté par l'intermédiaire d'un apport de puissance mécanique via une machine électrique, afin de bénéficier d'une chambre de combustion déjà allumée mais avec une température interne maitrisée. FR 3 115 825 A1, WO 95/02120 A1, US 2007/151258 A1 et WO 2022/101586 A1 divulguent des exemples d'aéronefs éventuellement multi moteurs comprenant une machine électrique.

Les applications bimoteur impliquent de nombreuses fonctions, telles que le démarrage du générateur de gaz, la génération d'électricité à bord, ou la fourniture de puissance mécanique au rotor principal. Les solutions existantes, permettant de réaliser certaines de ces fonctions ne sont pas entièrement satisfaisantes. En particulier, elles ne permettent pas d'apporter la redondance nécessaire à la fonction démarrage du moteur qui se trouve en mode veille, ni de limiter l'impact du prélèvement électrique sur le moteur lorsque l'hélicoptère ne fonctionne pas en mode SEO. Il existe donc un besoin pour un ensemble propulsif d'aéronef bimoteur ou multi moteurs présentant une architecture répondant au moins en partie aux inconvénients précités.

### Exposé de l'invention

Le présent exposé concerne un ensemble propulsif pour aéronef hybridé, notamment d'hélicoptère multi-moteurs, comprenant :
- au moins un premier moteur et un deuxième moteur ayant chacun un générateur de gaz et une turbine libre entraînée en rotation par un flux de gaz généré par le générateur de gaz,
- un rotor principal couplé à la turbine libre du premier moteur et du deuxième moteur,
- le premier moteur et le deuxième moteur comprenant chacun une première machine électrique et une deuxième machine électrique de puissance inférieure à la première machine électrique, l'une de la première ou de la deuxième machine électrique étant apte à être couplée au générateur de gaz et à mettre en rotation le générateur de gaz lors d'une phase de démarrage du moteur, et étant en outre apte à être couplée à la turbine libre après la phase de démarrage du moteur afin de générer de l'énergie électrique, l'autre de la première ou de la deuxième machine électrique étant couplée au générateur de gaz uniquement, au moins l'une de la première ou de la deuxième machine électrique du premier moteur et/ou du deuxième moteur étant apte à transmettre de l'énergie électrique à l'autre de la première ou de la deuxième machine électrique.

Le rotor principal peut être couplé à la turbine libre du premier moteur et du deuxième moteur par l'intermédiaire d'un premier et d'un deuxième moyen de couplage principal respectivement. Par ailleurs, la turbine libre de chacun du premier et du deuxième moteur peut être en prise directe avec le rotor principal, ou par l'intermédiaire d'un réducteur mécanique.

On comprend que selon le présent exposé, chacun du premier et du deuxième moteur est équipé d'une première machine électrique et d'une deuxième machine électrique, de préférence de manière symétrique. Alors que l'une de la première ou de la deuxième machine électrique est apte à être couplée avec le générateur de gaz ou avec la turbine libre selon les phases de fonctionnement, l'autre machine électrique est couplée uniquement au générateur de gaz. La première machine électrique est en outre dimensionnée de manière à pouvoir fournir une puissance supérieure à la deuxième machine électrique, notamment pour des phases de démarrage rapide. La première machine électrique est donc de forte puissance, de l'ordre d'une ou plusieurs centaines de kilowatts, alors que la deuxième machine électrique est de faible puissance, de l'ordre de 10kW, telle qu'une génératrice/démarreur habituellement utilisée dans les moteurs d'aéronefs.

Selon cette configuration, l'une de la première ou de la deuxième machine électrique est apte à être couplée à la turbine libre après la phase de démarrage du turbomoteur afin de générer de l'énergie électrique. Autrement dit, en vol, la turbine libre entraîne avantageusement en rotation ladite première ou deuxième machine électrique, fonctionnant en génératrice électrique, de telle sorte que l'énergie cinétique destinée à être transformée en énergie électrique est avantageusement prélevée sur la turbine libre, et non sur le générateur de gaz. Cela permet de fournir de l'électricité en limitant l'impact sur le rendement du moteur. Il en résulte que le turbomoteur selon l'invention permet avantageusement de fournir de l'électricité sans trop pénaliser son rendement.

De plus, lors d'un fonctionnement en mode SEO, lorsque le premier (ou le deuxième) moteur entraine seul le rotor principal, la première (ou la deuxième) machine électrique entrainée par la turbine libre et fonctionnant en mode génératrice peut être utilisée pour apporter de l'énergie électrique à la deuxième (ou la première) machine électrique couplée au générateur de gaz uniquement, afin d'assister ce dernier. Dans le même temps, la première ou la deuxième machine électrique du moteur fonctionnant en mode veille peut être utilisée pour maintenir le générateur de gaz de ce moteur en rotation à faible vitesse. La première machine électrique de forte puissance peut en outre être utilisée pour un redémarrage rapide du moteur qui est en mode veille, notamment en cas d'urgence. La première ou la deuxième machine électrique peuvent également être utilisées de façon indépendante afin de réaliser un redémarrage normal, permettant ainsi une redondance.

De plus, il est possible d'utiliser les deux machines électriques en mode démarrage en même temps afin d'augmenter la puissance injectée au générateur de gaz lors de la phase de réactivation rapide et donc de réduire le temps de réactivation.

Par conséquent, l'architecture multi moteurs selon le présent exposé présente l'avantage d'être simple en limitant le nombre de composants et de connexions. En particulier, elle permet d'améliorer la fiabilité du démarrage pour le moteur en mode veille dans le cadre du mode SEO, et d'optimiser la performance du moteur en prélevant via l'une des machines électriques sur la turbine libre après la phase de démarrage en fonctionnement bimoteur classique, tout en effectuant de l'hybridation interne par la transmission d'énergie électrique entre la première et la deuxième machine électrique. Il est ainsi possible de rationaliser et d'optimiser le nombre de machines électriques et l'architecture de l'ensemble propulsif, tout en permettant de réaliser un nombre élevé de fonctions, et en diminuant la masse du dispositif.

Dans certains modes de réalisation, la première machine électrique est couplée à un arbre de la turbine libre par l'intermédiaire de premiers moyens de couplage désactivables, et est couplée à un arbre du générateur de gaz par l'intermédiaire de deuxièmes moyens de couplage désactivables, les premiers et deuxièmes moyens de couplage désactivables étant configurés de manière à ne pas être activés simultanément.

Par « moyens de couplage désactivables », on entend que les moyens de couplage peuvent être dans une position activée dans laquelle les organes reliés auxdits moyens de couplage sont couplés, ou dans une position désactivée dans laquelle lesdits organes sont découplés, étant entendu que par "organe" on entend les machines électriques, le rotor principal et le générateur de gaz.

Selon l'invention, lorsque les premiers moyens de couplage sont activés, les deuxièmes moyens de couplage sont désactivés, c'est-à-dire que la première machine électrique est couplée à la turbine libre tout en étant découplée du générateur de gaz, tandis qu'à l'inverse, lorsque les deuxièmes moyens de couplage sont activés, les premiers moyens de couplage sont désactivés, c'est-à-dire que la première machine électrique réversible est couplée au générateur de gaz tout en étant découplée de la turbine libre. Sans sortir du cadre de l'invention, on peut également prévoir une position intermédiaire dans laquelle les premiers et deuxièmes moyens de couplage sont désactivés en même temps.

Conformément à l'invention, la première machine électrique est de préférence réversible et fonctionne en moteur électrique lorsque les deuxièmes moyens de couplage sont activés, de manière à entraîner en rotation le générateur de gaz lors de la phase de démarrage du moteur. Corrélativement, la première machine électrique réversible fonctionne en génératrice électrique lorsque les premiers moyens de couplage sont activés, de manière à produire de l'électricité par le prélèvement d'énergie cinétique sur la turbine libre, et ce après la phase de démarrage du moteur, c'est-à-dire essentiellement en vol. Grâce au fait que les premiers et seconds moyens de couplage ne peuvent être activés simultanément, on évite l'apparition de la situation non souhaitée dans laquelle la turbine libre entraîne en rotation le générateur de gaz.

On comprend que selon ce mode de réalisation, la deuxième machine électrique est couplée uniquement au générateur de gaz. Cependant, on notera qu'une configuration dans laquelle la deuxième machine électrique et la première machine électrique sont inversées est également possible.

Dans certains modes de réalisation, les premiers moyens de couplage comprennent une première roue libre, les deuxièmes moyens de couplage comprennent une deuxième roue libre, et les première et deuxième roues libres sont montées en opposition.

Un intérêt de la roue libre est qu'elle ne nécessite pas d'être commandée électroniquement ou mécaniquement par un opérateur extérieur. Une telle roue libre est généralement constituée d'un moyeu et d'une couronne périphérique montée rotative sur le moyeu. Le moyeu pouvant entraîner en rotation la couronne périphérique mais pas l'inverse. Aussi, le moyeu ne peut entraîner la couronne que lorsque le moyeu tourne dans un sens prédéterminé, que l'on appellera « sens d'engagement ». Dans le cas contraire, le moyeu et la couronne périphérique tournent librement l'un par rapport à l'autre. En l'espèce, les moyens de couplage désactivables sont activés lorsque le moyeu de la roue libre entraîne en rotation la couronne périphérique, et, à l'inverse, les moyens de couplage désactivables sont désactivés lorsque le moyeu de la roue libre n'entraîne pas en rotation la couronne périphérique.

Par "montées en opposition", on entend que la première roue libre peut transmettre un couple de rotation provenant de la première machine électrique, alors que la deuxième roue libre peut transmettre un couple de rotation vers la première machine électrique.

Dans certains modes de réalisation, les premiers moyens de couplage comprennent un premier réducteur ayant un premier coefficient de réduction, tandis que les deuxièmes moyens de couplage comprennent un deuxième réducteur ayant un deuxième coefficient de réduction, et le rapport des premier et deuxième coefficients de réduction est inférieur à une valeur limite.

Par réducteur, il faut entendre un ou plusieurs étages de réduction, comportant par exemple des trains d'engrenages. De tels réducteurs sont connus par ailleurs. Comme le générateur de gaz et la turbine libre tournent généralement sensiblement plus vite que la première machine électrique, le réducteur permet d'adapter la vitesse de rotation de la machine électrique aux vitesses du générateur de gaz et de la turbine libre.

De préférence, la valeur limite est choisie de manière à ce que les première et deuxième roues libres ne soient pas engagées simultanément. De préférence, cette valeur limite est proportionnelle au rapport de la vitesse nominale du générateur de gaz sur la vitesse nominale de la turbine libre.

Dans certains modes de réalisation, lorsque l'un du premier ou du deuxième moteur entraine seule le rotor principal, le générateur de gaz de l'autre du premier ou du deuxième moteur est maintenu dans un mode veille, par l'intermédiaire de la première ou de la deuxième machine électrique.

Lorsque l'aéronef fonctionne en mode SEO, le deuxième moteur, par exemple, assure l'intégralité de la fourniture de puissance, alors que le premier moteur est volontairement arrêtée, ou de préférence mise en mode veille, afin d'optimiser la consommation spécifique. Le mode veille permet de maintenir le générateur de gaz du premier moteur dans une plage de 5 à 30% de sa vitesse de rotation nominale, afin de permettre un rallumage rapide en cas de nécessité, notamment lorsque le deuxième moteur s'arrête involontairement.

Dans certains modes de réalisation, la deuxième machine électrique est couplée au générateur de gaz uniquement, par l'intermédiaire d'une roue libre.

Par conséquent, la deuxième machine électrique peut entrainer le générateur de gaz lors d'une phase de démarrage, mais à l'inverse, le générateur de gaz ne peut pas entrainer la deuxième machine électrique. Par conséquent, la deuxième machine électrique ne peut pas non plus fournir de l'énergie électrique à la première machine électrique. Selon cette configuration, seule la première machine électrique peut fournir de l'énergie électrique à deuxième machine électrique, notamment dans le cadre d'une assistance au générateur de gaz.

Le présent exposé concerne également un aéronef hybridé comprenant un ensemble propulsif selon l'un quelconque des modes de réalisation précédents, l'aéronef hybridé étant un hélicoptère multi moteurs, notamment bimoteur.

On comprend par « aéronef hybridé », un aéronef comprenant un moteur thermique permettant d'entrainer en rotation un rotor principal, et au moins une machine électrique permettant d'apporter de la puissance au moteur thermique.

Le présent exposé concerne également un procédé d'optimisation de fonctionnement d'un aéronef multi-moteur utilisant un ensemble propulsif selon l'un quelconque des modes de réalisation précédents, dans lequel, lors d'une phase de démarrage de l'un du premier ou du deuxième moteur, la première machine électrique et/ou la deuxième machine électrique entrainent le générateur de gaz dudit premier moteur ou deuxième moteur sans entrainer la turbine libre, et après la phase de démarrage, la turbine libre dudit premier ou deuxième moteur entraine l'une de la première machine électrique ou de la deuxième machine électrique afin de générer de l'énergie électrique, la première machine électrique ou la deuxième machine électrique générant de l'énergie électrique étant apte à transmettre de l'énergie électrique à l'autre de la première ou de la deuxième machine électrique couplée uniquement au générateur de gaz.

Dans certains modes de réalisation, l'un du premier ou du deuxième moteur est apte à fonctionner seul, l'autre moteur fonctionnant alors dans un mode veille en étant entrainé au ralenti par la première ou la deuxième machine électrique, le moteur fonctionnant dans le mode veille étant redémarré par la première machine électrique au moins lors d'une phase de redémarrage rapide.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en coupe d'un ensemble propulsif pour aéronef bimoteur selon l'invention,
[Fig. 2] La figure 2 représente un schéma fonctionnel de l'ensemble propulsif de la figure 1 selon un mode de réalisation.

### Description des modes de réalisation

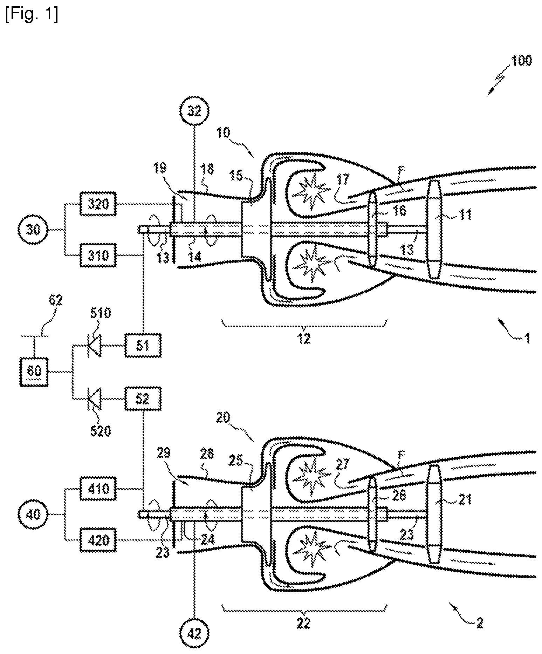

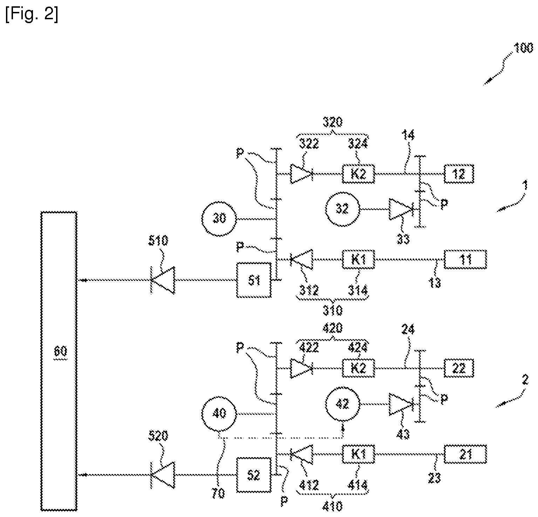

Une architecture d'un ensemble propulsif 100 selon un mode de réalisation de l'invention va être décrite dans la suite de la description, en référence aux figures 1 et 2.

On notera de manière générale que, par souci de clarté, les figures représentent schématiquement et de manière fonctionnelle et simplifiée une architecture du dispositif, sans représenter tous les détails des éléments constituant les turbomachines et les différents organes de transmission de puissance. En particulier, les pignons P permettant l'entrainement des arbres 13, 14 par les machines électriques, et inversement le cas échéant, sont représentés schématiquement, et les éventuels rapports de vitesse ne sont pas représentés.

La figure 1 représente de façon schématique un ensemble propulsif 100 d'un aéronef bimoteur, comprenant un premier moteur, dans cet exemple une première turbomachine 1 et un deuxième moteur, dans cet exemple une deuxième turbomachine 2, entrainant en rotation des organes de transmissions 60 d'un hélicoptère portant une hélice ou un rotor principal 62. Les turbomachines peuvent être des turbomoteurs ou des turbopropulseurs. Bien que l'ensemble propulsif décrit dans la suite de la description comprenne deux turbomachines, cet exemple n'est pas limitatif, l'invention s'appliquant également aux ensembles propulsif d'aéronefs multi moteurs comprenant plus de deux moteurs.

La première turbomachine 1 et la deuxième turbomachine 2 sont de préférence identiques et présentent les mêmes caractéristiques. Aussi, la description ci-dessous fait référence à la fois à la première et à la deuxième turbomachine 1, 2.

La première turbomachine 1 et la deuxième turbomachine 2 comprennent respectivement une turbine à gaz 10, 20 ayant un générateur de gaz 12, 22 et une turbine libre 11, 21 apte à être entraînée en rotation par un flux de gaz généré par le générateur de gaz 12, 22. La turbine libre 11, 21 est montée sur un arbre 13, 23 qui transmet le mouvement de rotation à un organe récepteur tel un rotor principal 62 de l'hélicoptère par l'intermédiaire des organes de transmission 60. Selon cet exemple, la turbine à gaz 10, 20 représentée sur la figure 1 est du type à prise de mouvement avant avec renvoi par arbre coaxial. On pourrait très bien considérer, sans sortir du cadre de la présente invention, une turbine à gaz à turbine libre du type à prise de mouvement avant avec renvoi par arbre interne ou extérieur, ou bien une turbomachine à turbine libre du type à prise de mouvement arrière. De la même manière, la turbine peut être en prise directe ou intégrer un réducteur de vitesse 51, 52 sans remettre en cause le principe de l'invention.

Le générateur de gaz 12, 22 comporte un arbre rotatif 14, 24 sur lequel sont montés un compresseur 15, 25 et une turbine 16, 26, ainsi qu'une chambre de combustion 17, 27 disposée axialement entre le compresseur 15, 25 et la turbine 16, 26 dès lors que l'on considère le générateur de gaz 12, 22 selon la direction axiale de l'arbre rotatif 14, 24. La turbine à gaz 10, 20 présente un carter 18, 28 muni d'une entrée d'air 19, 29 par laquelle l'air frais entre dans le générateur de gaz 12, 22. Après son admission dans l'enceinte du générateur de gaz 12, 22, l'air frais est comprimé par le compresseur 15, 25 qui le refoule vers l'entrée de la chambre de combustion 17, 27 dans laquelle il est mélangé avec du carburant. La combustion qui a lieu dans la chambre de combustion 17, 27 provoque l'évacuation à grande vitesse des gaz brûlés vers la turbine 16, 26, ce qui a pour effet d'entraîner en rotation de l'arbre 14, 24 du générateur de gaz 12, 22 et, par conséquent, le compresseur 16, 26. La vitesse de rotation de l'arbre 14, 24 du générateur de gaz 12, 22 est déterminée par le débit de carburant entrant dans la chambre de combustion 17, 27.

Malgré l'extraction d'énergie cinétique par la turbine 16, 26, le flux de gaz sortant du générateur de gaz présente une énergie cinétique significative. Comme on le comprend à l'aide de la figure 1, le flux de gaz F est dirigé vers la turbine libre 11, 21 ce qui a pour effet de provoquer une détente dans la turbine libre 11, 21 conduisant à la mise en rotation de la roue de turbine et de l'arbre 13, 23.

Le rotor principal 62 est couplé, via les organes de transmission 60, à l'arbre 13 de la turbine libre 11 de la première turbine à gaz 10 par l'intermédiaire d'un premier moyen de couplage principal 510 disposé entre le réducteur de vitesse 51 et les organes de transmission 60. Le rotor principal 62 est également couplé, via les organes de transmission 60, à l'arbre 23 de la turbine libre 21 de la deuxième turbine à gaz 20 par l'intermédiaire d'un deuxième moyen de couplage principal 520 disposé entre le réducteur de vitesse 52 et les organes de transmission 60.

De préférence, le premier et le deuxième moyen de couplage principal 510, 520 comprend une roue libre montée de telle sorte que la rotation de l'arbre 13, 23 peut entraîner en rotation le rotor principal 62, mais qu'au contraire, la rotation du rotor principal 62 ne peut pas entraîner en rotation l'arbre 13, 23 de la turbine libre 11, 21. Autrement dit, la roue libre du premier et du deuxième moyen de couplage principal 510, 520 ne peut transférer un couple de rotation que dans le sens de la turbine libre 11, 21 vers le rotor principal 62, mais pas l'inverse. Sur un hélicoptère, cette roue libre est couramment appelée "roue libre moteur". On notera que l'utilisation d'une roue libre pour les moyens de couplage principaux 510, 520 n'est pas limitative, la roue libre pouvant être remplacée par tout système de crabot ou d'embrayage.

Les turbomachines 1, 2 comportent en outre chacune une première machine électrique 30, 40, de préférence réversible et comprenant un moteur électrique apte à fonctionner de manière réversible en génératrice électrique. La première machine électrique 30, 40 est couplée mécaniquement à l'arbre 13, 23 de la turbine libre 11, 21 par l'intermédiaire de premiers moyens de couplage désactivable 310, 410.

Les premiers moyens de couplage désactivable 310, 410 comprennent une première roue libre 312, 412 et, de préférence, un premier réducteur d'adaptation de vitesse 314, 414 disposé entre la turbine libre 11, 21 et la première roue libre 312, 412.

La première roue libre 312, 412 est montée de telle sorte que la rotation de la turbine libre 11, 21 peut entraîner en rotation la première machine électrique 30, 40 fonctionnant alors en mode génératrice, mais qu'au contraire, la rotation de la première machine électrique 30, 40 ne peut pas entraîner la turbine libre 11, 21. Autrement dit, la roue libre 312, 412 du premier moyen de couplage désactivable 310, 410 ne peut transférer un couple de rotation que dans le sens de la turbine libre 11, 21 vers le première machine électrique 30, 40.

La première machine électrique 30, 40 est en outre couplée mécaniquement à l'arbre 14, 24 du générateur de gaz 12, 22 par l'intermédiaire de deuxièmes moyens de couplage désactivable 320, 420.

Les deuxièmes moyens de couplage désactivable 320, 420 comprennent une deuxième roue libre 322, 422 et, de préférence, un deuxième réducteur d'adaptation de vitesse 324, 424 disposé entre le générateur de gaz 12, 22 et la deuxième roue libre 322, 422.

La deuxième roue libre 322, 422 est montée de telle sorte que la rotation de la première machine électrique 30, 40, fonctionnant en mode moteur, peut entraîner en rotation le générateur de gaz 12, 22, mais qu'au contraire, la rotation du générateur de gaz 12, 22 ne peut pas entraîner la première machine électrique 30, 40. Autrement dit, la roue libre 322, 422 du deuxième moyen de couplage désactivable 320, 420 ne peut transférer un couple de rotation que dans le sens de la première machine électrique 30, 40 vers le générateur de gaz 12, 22.

Les première et deuxième roues libres 312, 412 et 322, 422 sont montées en opposition. En l'espèce, elles présentent des sens d'engagement opposés. Ainsi, lorsque la première machine électrique réversible 30, 40 fonctionne en mode moteur pour entraîner en rotation l'arbre 14, 24 du générateur de gaz 12, 22 (deuxième roue libre 322, 422 engagée, i.e. deuxièmes moyens de couplage 320, 420 activés), la première roue libre 312, 412 ne transmet pas le couple de rotation de la première machine électrique 30, 40 vers l'arbre 13, 23 de la turbine libre 11, 21 (premiers moyens de couplage 310, 410 désactivés). Inversement, lorsque l'arbre 13, 23 de la turbine libre 11, 21 entraîne en rotation la première machine électrique 30, 40 fonctionnant en génératrice électrique (première roue libre 312, 412 engagée, i.e. premiers moyens de couplage 310, 410 activés), la deuxième roue libre 322, 422 ne transmet pas le couple de rotation de la première machine électrique 30, 40 vers l'arbre 14, 24 du générateur de gaz 12, 22 (deuxièmes moyens de couplage 320, 420 désactivés).

Le premier réducteur d'adaptation de vitesse 314, 414 a un premier coefficient de réduction K1 de préférence choisi de telle manière que la vitesse de la première machine électrique 30, 40 soit adaptée à la plage de vitesse requise pour permettre la fourniture d'électricité. Le deuxième réducteur d'adaptation de vitesse 324, 424 a un deuxième coefficient de réduction K2 de préférence choisi de manière que la vitesse de la première machine électrique 30, 40 soit adaptée à la plage de vitesse requise pour le démarrage du générateur de gaz 12, 22.

Pour éviter que la turbine libre 11, 21 n'entraîne en rotation l'arbre 14, 24 du générateur de gaz 12, 22, il faut que la deuxième roue libre 322, 422 ne soit pas engagée. Pour ce faire, les coefficients de réduction K1, K2 du premier réducteur 314, 414 et du deuxième réducteur 324, 424 sont choisis de manière appropriée. Par exemple, mais non nécessairement, les coefficients de réduction K1, K2 suivent les rapports décrits dans le document FR2929324.

Les turbomachines 1, 2 comprennent également chacune une deuxième machine électrique 32, 42 couplée mécaniquement à l'arbre 14, 24 du générateur de gaz 12, 22 uniquement, de préférence par l'intermédiaire d'une troisième roue libre 33, 43 permettant à la deuxième machine électrique 32, 42 de ne pas être entrainée par le générateur de gaz lorsqu'elle n'est pas utilisée.

Dans cet exemple, alors que la première machine électrique 30, 40 est une machine électrique de forte puissance, notamment de plusieurs centaines de kilowatts, la deuxième machine électrique 32, 42 peut être un démarreur habituellement utilisé, d'une puissance de l'ordre de 10kW. On notera cependant que cette configuration n'est pas limitative, les première et deuxième machines électriques pouvant être inversées sans sortir du cadre de l'invention.

Cette architecture de l'ensemble propulsif 100 permet différents modes de fonctionnement décrits dans la suite de la description, et permet d'optimiser le fonctionnement de l'ensemble propulsif 100.

La présence des deux turbomachines 1, 2 permet un fonctionnement en mode SEO (pour « Single Engine Operative » en anglais), dans lequel seule la deuxième turbomachine 2 (par exemple) est en fonctionnement, assurant l'intégralité de la fourniture de puissance au rotor principal 62, la première turbomachine 1 étant volontairement arrêtée. Lorsque le mode SEO est engagé, le générateur de gaz 12 est mis en veille (ou en super-ralenti assisté), c'est-à-dire qu'il ne fournit plus de puissance. En revanche, pour être démarré le plus vite possible, le générateur de gaz 12 est entrainé dans la fenêtre d'allumage (dans une plage de 5 à 30% de sa vitesse de rotation nominale) par la première machine électrique 30 ou par la deuxième machine électrique 32.

A partir de ce fonctionnement en mode SEO, il est possible de redémarrer la première turbomachine 1 dans le cadre d'un redémarrage normal, c'est-à-dire hors situation d'urgence nécessitant un redémarrage rapide, en optimisant le fonctionnement de l'aéronef. Un tel procédé d'optimisation comprend dans un premier temps, lors de la phase de démarrage de la première turbomachine 1, le fait d'entrainer le générateur de gaz 12 par la première machine électrique 30 et/ou la deuxième machine électrique 32, sans entrainer la turbine libre 11. En effet, compte tenu de la présence de la première roue libre 312, montée en opposition avec la deuxième roue libre 322, la première machine électrique 30 ne peut entrainer la turbine libre 11 en rotation. Par ailleurs, la deuxième machine électrique 32 est couplée au générateur de gaz 12 uniquement, et ne peut donc pas entrainer la turbine libre 11.

La première et la deuxième machine électrique 30, 32 peuvent être pilotées par une unité de contrôle (non représentée). Ainsi, la première et/ou la deuxième machine électrique 30, 32 entraînent le générateur de gaz 12 par l'intermédiaire des roues libres 322, 33 respectivement, permettant le démarrage du générateur de gaz 12. Lors du démarrage du générateur de gaz 12, les gaz chauds entrainent la turbine libre 11, cette dernière étant reliée au rotor principal 62 via la première roue-libre 312, le réducteur de vitesse 51 et la roue libre du premier moyen de couplage principal 510.

Dans un deuxième temps, après la phase de démarrage, la turbine libre 11 entraine la première machine électrique 30 par l'intermédiaire de la première roue libre 312 afin de générer de l'énergie électrique. La première machine électrique 30 peut être reliée électriquement à un réseau électrique de l'ensemble propulsif 100 afin d'alimenter différents équipements électriques (non représentés). On notera que les étapes ci-dessus s'appliquent également à un démarrage normal (et non un redémarrage depuis le mode SEO) de l'une ou l'autre des turbomachines 1 et 2, et hors situation d'urgence.

En outre, après la phase de démarrage et lorsque les deux générateurs de gaz 12, 22 sont en fonctionnement (par exemple après le rallumage de l'une des deux turbomachines pour sortir du mode SEO), la première machine électrique 30, 40 générant de l'énergie électrique peut transmettre de l'énergie électrique à la deuxième machine électrique 32, 42 couplée uniquement au générateur de gaz 12, 22, par l'intermédiaire d'une connexion électrique 70, afin de réaliser de l'hybridation interne et assister le générateur de gaz 12, 22 via la deuxième machine électrique 32, 42 en prise avec l'arbre 14, 24 du générateur de gaz 12, 22.

On notera que dans l'exemple illustré sur la figure 2, seule la deuxième turbomachine 2 est équipée d'une connexion électrique 70. Cela permet à la première machine électrique 40 d'assister le générateur de gaz 22 via la deuxième machine électrique 42 en prise avec l'arbre 24 du générateur de gaz 22, dans le cadre du mode SEO et lorsque la deuxième turbomachine 2 entraine seule le rotor principal 62.

Cet exemple n'est cependant pas limitatif, l'une ou l'autre, ou les deux turbomachines 1, 2 pouvant être équipée(s) d'une telle connexion électrique 70. En outre, dans cet exemple, compte tenu de la présence de la troisième roue libre 33, 43, la deuxième machine électrique 32, 42 ne peut pas être entrainée pour fonctionner en mode génératrice, et par conséquent seule la première machine électrique 30, 40 peut transférer de l'énergie électrique à la deuxième machine électrique 32, 42, mais pas l'inverse. Cependant, en l'absence de la troisième roue libre 33, 43, les première 30, 40 et deuxième 32, 42 machines électriques pourraient s'échanger de l'énergie électrique mutuellement, sans sortir du cadre de l'invention.

Par ailleurs, il est également possible d'effectuer un redémarrage rapide de la première turbomachine 1 depuis le mode veille. Ce redémarrage rapide est identique à l'étape de démarrage ou de redémarrage décrite plus haut, mais la première machine électrique 30 de forte puissance est nécessairement utilisée dans ce cas de figure, seule ou éventuellement complétée par la deuxième machine électrique 32 afin d'optimiser le temps de réactivation. En effet, la puissance de la première machine électrique 30 étant de l'ordre de plusieurs dizaines à quelques centaines de kilowatts, il est possible de démarrer le générateur de gaz 12 beaucoup plus rapidement qu'avec un démarreur d'une puissance de l'ordre de 10kW, habituellement utilisé. Cela procure notamment un avantage opérationnel dans le cas de missions de type secours médical, ou lors des tentatives de redémarrage rapide en vol.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Ensemble propulsif (100) pour aéronef hybridé, notamment d'hélicoptère multi-moteurs, comprenant :
- au moins un premier moteur (1) et un deuxième moteur (2) ayant chacun un générateur de gaz (12, 22) et une turbine libre (11, 21) entraînée en rotation par un flux de gaz généré par le générateur de gaz,
- un rotor principal (62) couplé à la turbine libre (11, 21) du premier et du deuxième moteur (1, 2),
- le premier et le deuxième moteur (1, 2) comprenant chacun une première machine électrique (30, 40) et une deuxième machine électrique (32, 42), **caractérisé en ce que** la deuxième machine électrique (32, 42) est de puissance inférieure à la première machine électrique (30, 40), l'une de la première ou de la deuxième machine électrique étant apte à être couplée au générateur de gaz (12, 22) et à mettre en rotation le générateur de gaz lors d'une phase de démarrage du moteur, et étant en outre apte à être couplée à la turbine libre (11, 21) après la phase de démarrage afin de générer de l'énergie électrique, l'autre de la première ou de la deuxième machine électrique étant couplée au générateur de gaz (12, 22) uniquement, au moins l'une de la première ou de la deuxième machine électrique du premier moteur (1) et/ou du deuxième moteur (2) étant apte à transmettre de l'énergie électrique à l'autre de la première ou de la deuxième machine électrique.

2. Ensemble propulsif (100) selon la revendication 1, dans lequel la première machine électrique (30, 40) est couplée à un arbre (13, 23) de la turbine libre (11, 21) par l'intermédiaire de premiers moyens de couplage désactivables (310, 410), et est couplée à un arbre (14, 24) du générateur de gaz (12, 22) par l'intermédiaire de deuxièmes moyens de couplage désactivables (320, 420), les premiers et deuxièmes moyens de couplage désactivables étant configurés de manière à ne pas être activés simultanément.

3. Ensemble propulsif (100) selon la revendication 2, dans lequel les premiers moyens de couplage désactivables (310, 410) comprennent une première roue libre (312, 412), les deuxièmes moyens de couplage désactivables (320, 420) comprennent une deuxième roue libre (322, 422), et les première et deuxième roues libres sont montées en opposition.

4. Ensemble propulsif (100) selon la revendication 2 ou 3, dans lequel les premiers moyens de couplage désactivables (310, 410) comprennent un premier réducteur (314, 414) ayant un premier coefficient de réduction (K1), tandis que les deuxièmes moyens de couplage désactivables (320, 420) comprennent un deuxième réducteur (324, 424) ayant un deuxième coefficient de réduction (K2), et le rapport des premier et deuxième coefficients de réduction (K1, K2) est inférieur à une première valeur limite (L1).

5. Ensemble propulsif (100) selon l'une quelconque des revendications 1 à 4, dans lequel, lorsque l'un du premier ou du deuxième moteur (1, 2) entraine seule le rotor principal (62), le générateur de gaz (12, 22) de l'autre du premier ou du deuxième moteur (1, 2) est maintenu dans un mode veille, par l'intermédiaire de la première ou de la deuxième machine électrique (30, 40, 32, 42).

6. Ensemble propulsif (100) selon l'une quelconque des revendications 1 à 5, dans lequel la deuxième machine électrique (32, 42) est couplée au générateur de gaz (12, 22) uniquement, par l'intermédiaire d'une roue libre (33, 43).

7. Aéronef hybridé comprenant un ensemble propulsif (100) selon l'une quelconque des revendications précédentes, l'aéronef hybridé étant un hélicoptère multi moteurs, notamment bimoteur.

8. Procédé d'optimisation de fonctionnement d'un aéronef multi-moteur utilisant un ensemble propulsif (100) selon l'une quelconque des revendications 1 à 6, dans lequel, lors d'une phase de démarrage de l'un du premier ou du deuxième moteur (1, 2), la première machine électrique (30, 40) et/ou la deuxième machine électrique (32, 42) entrainent le générateur de gaz (12, 22) dudit premier moteur ou deuxième moteur (1, 2) sans entrainer la turbine libre (11, 21), et après la phase de démarrage, la turbine libre (11, 21) dudit premier ou deuxième moteur (1, 2) entraine l'une de la première machine électrique (30, 40) ou de la deuxième machine électrique (32, 42) afin de générer de l'énergie électrique, la première machine électrique (30, 40) ou la deuxième machine électrique (32, 42) générant de l'énergie électrique étant apte à transmettre de l'énergie électrique à l'autre de la première ou de la deuxième machine électrique couplée uniquement au générateur de gaz (12, 22).

9. Procédé selon la revendication 8, dans lequel l'un du premier ou du deuxième moteur est apte à fonctionner seul, l'autre moteur fonctionnant alors dans un mode veille en étant entrainé au ralenti par la première ou la deuxième machine électrique (30, 40, 32, 42), le moteur (1,2) fonctionnant dans le mode veille étant redémarré par la première machine électrique (30, 40) au moins lors d'une phase de redémarrage rapide.

## Patentansprüche

1. Antriebseinheit (100) für ein Hybrid-Luftfahrzeug, insbesondere einen mehrmotorigen Helikopter, umfassend:
- zumindest einen ersten Motor (1) und einen zweiten Motor (2), die jeweils einen Gasgenerator (12, 22) und eine freie Turbine (11, 21) aufweisen, die durch einen Gasstrom in Drehung versetzt wird, der von dem Gasgenerator erzeugt wird,
- einen Hauptrotor (62), der mit der freien Turbine (11, 21) des ersten und des zweiten Motors (1, 2) gekoppelt ist,
- wobei der erste und der zweite Motor (1, 2) jeweils eine erste elektrische Maschine (30, 40) und eine zweite elektrische Maschine (32, 42) umfassen,
**dadurch gekennzeichnet, dass** die zweite elektrische Maschine (32, 42) eine geringere Leistung aufweist als die erste elektrische Maschine (30, 40), wobei eine von der ersten oder der zweiten elektrischen Maschine dazu geeignet ist, mit dem Gasgenerator (12, 22) gekoppelt zu werden und den Gasgenerator während einer Startphase des Motors in Drehung zu versetzen, und ferner dazu geeignet ist, mit der freien Turbine (11, 21) nach der Startphase gekoppelt zu werden, um elektrische Energie zu erzeugen, wobei die andere von der ersten oder der zweiten elektrischen Maschine nur mit dem Gasgenerator (12, 22) gekoppelt ist, wobei zumindest eine von der ersten oder der zweiten elektrischen Maschine des ersten Motors (1) und/oder des zweiten Motors (2) dazu geeignet ist, elektrische Energie auf die andere von der ersten und/oder der zweiten elektrischen Maschine zu übertragen.

2. Antriebseinheit (100) nach Anspruch 1, wobei die erste elektrische Maschine (30, 40) mittels erster deaktivierbarer Kopplungsmittel (310, 410) mit einer Welle (13, 23) der freien Turbine (11, 21) gekoppelt ist, und mittels zweiter deaktivierbarer Kopplungsmittel (320, 420) mit einer Welle (14, 24) des Gasgenerators (12, 22) gekoppelt ist, wobei die ersten und zweiten deaktivierbaren Kopplungsmittel auf eine Weise ausgestaltet sind, dass sie nicht gleichzeitig aktiviert werden.

3. Antriebseinheit (100) nach Anspruch 2, wobei die ersten deaktivierbaren Kopplungsmittel (310, 410) ein erstes Freilaufrad (312, 412) umfassen, die zweiten deaktivierbaren Kopplungsmittel (320, 420) ein zweites Freilaufrad (322, 422) umfassen, und das erste und das zweite Freilaufrad einander entgegengesetzt sind.

4. Antriebseinheit (100) nach Anspruch 2 oder 3, wobei die ersten deaktivierbaren Kopplungsmittel (310, 410) ein erstes Getriebe (314, 414) umfassen, das einen ersten Getriebekoeffizienten (K1) aufweist, während die zweiten deaktivierbaren Kopplungsmittel (320, 420) ein zweites Getriebe (324, 424) umfassen, das einen zweiten Getriebekoeffizienten (K2) aufweist, und das Verhältnis des ersten und des zweiten Getriebekoeffizienten (K1, K2) kleiner als ein erster Grenzwert (L1) ist.

5. Antriebseinheit (100) nach einem der Ansprüche 1 bis 4, wobei, wenn einer von dem ersten oder dem zweiten Motor (1, 2) alleine den Hauptrotor (62) antreibt, der Gasgenerator (12, 22) des anderen von dem ersten oder dem zweiten Motor (1, 2) mittels der ersten oder der zweiten elektrischen Maschine (30, 40, 32, 42) in einem Bereitschaftsmodus gehalten wird.

6. Antriebseinheit (100) nach einem der Ansprüche 1 bis 5, wobei die zweite elektrische Maschine (32, 42) mittels eines Freilaufrads (33, 43) nur mit dem Gasgenerator (12, 22) gekoppelt ist.

7. Hybrid-Luftfahrzeug, umfassend eine Antriebseinheit (100) nach einem der vorhergehenden Ansprüche, wobei das Hybrid-Luftfahrzeug ein mehrmotoriger, insbesondere zweimotoriger Helikopter ist.

8. Verfahren zur Optimierung des Betriebs eines mehrmotorigen Luftfahrzeugs, das eine Antriebseinheit (100) nach einem der Ansprüche 1 bis 6 verwendet, wobei während einer Startphase eines von dem ersten oder dem zweiten Motor (1, 2) die erste elektrische Maschine (30, 40) und/oder die zweite elektrische Maschine (32, 42) den Gasgenerator (12, 22) des ersten oder des zweiten Motors (1, 2) antreiben, ohne die freie Turbine (11, 21) anzutreiben, und nach der Startphase die freie Turbine (11, 21) des ersten oder des zweiten Motors (1, 2) eine von der ersten elektrischen Maschine (30, 40) oder der zweiten elektrischen Maschine (32, 42) antreibt, um elektrische Energie zu erzeugen, wobei die erste elektrische Maschine (30, 40) oder die zweite elektrische Maschine (32, 42), die elektrische Energie erzeugen, dazu geeignet ist, elektrische Energie auf die andere von der ersten oder der zweiten elektrischen Maschine zu übertragen, die nur mit dem Gasgenerator (12, 22) gekoppelt ist.

9. Verfahren nach Anspruch 8, wobei einer von dem ersten oder dem zweiten Motor dazu geeignet ist, alleine betrieben zu werden, wobei der andere Motor dann in einem Bereitschaftsmodus betrieben wird, indem er durch die erste oder die zweite elektrische Maschine (30, 40, 32, 42) im Leerlauf angetrieben wird, wobei der Motor (1, 2), der in dem Bereitschaftsmodus betrieben wird, zumindest während einer Schnellstartphase durch die erste elektrische Maschine (30, 40) wieder gestartet wird.

## Claims

1. A propulsion assembly (100) for a hybrid aircraft, in particular a multi-engine helicopter, comprising:
- at least a first engine (1) and a second engine (2) each having a gas generator (12, 22) and a free turbine (11, 21) driven in rotation by a gas stream generated by the gas generator,
- a main rotor (62) coupled to the free turbine (11, 21) of the first and second engines (1, 2),
- the first and second engines (1, 2) each comprising a first electric machine (30, 40) and a second electric machine (32, 42), **characterized in that** the second electric machine (32, 42) is of lower power than the first electric machine (30, 40), one of the first or second electric machines being able to be coupled to the gas generator (12, 22) and to set in rotation the gas generator during a start phase of the engine, and being further able to be coupled to the free turbine (11, 21) after the start phase in order to generate electrical energy, the other of the first or second electric machines being coupled to the gas generator (12, 22) only, at least one of the first or second electric machines of the first engine (1) and/or second engine (2) being able to transmit electrical energy to the other of the first or second electric machines.

2. The propulsion assembly (100) according to claim 1, wherein the first electric machine (30, 40) is coupled to a shaft (13, 23) of the free turbine (11, 21) via first deactivatable coupling means (310, 410), and is coupled to a shaft (14, 24) of the gas generator (12, 22) via second deactivatable coupling means (320, 420), the first and second deactivatable coupling means being configured so as not to be activated simultaneously.

3. The propulsion assembly (100) according to claim 2, wherein the first deactivatable coupling means (310, 410) comprise a first free wheel (312, 412), the second deactivatable coupling means (320, 420) comprise a second free wheel (322, 422), and the first and second free wheels are mounted in opposition.

4. The propulsion assembly (100) according to claim 2 or 3, wherein the first deactivatable coupling means (310, 410) comprise a first reduction gear (314, 414) having a first reduction coefficient (K1), while the second deactivatable coupling means (320, 420) comprise a second reduction gear (324, 424) having a second reduction coefficient (K2), and the ratio of the first and second reduction coefficients (K1, K2) is smaller than a first limit value (L1).

5. The propulsion assembly (100) according to any one of claims 1 to 4, wherein, when one of the first or second engines (1, 2) alone drives the main rotor (62), the gas generator (12, 22) of the other of the first or second engines (1, 2) is kept in a standby mode, via the first or second electric machine (30, 40, 32, 42).

6. The propulsion assembly (100) according to any one of claims 1 to 5, wherein the second electric machine (32, 42) is coupled to the gas generator (12, 22) only, via a free wheel (33, 43).

7. A hybrid aircraft comprising a propulsion assembly (100) according to any one of the preceding claims, the hybrid aircraft being a multi-engine helicopter, in particular a twin-engine helicopter.

8. A method for optimizing the operation of a multi-engine aircraft using a propulsion assembly (100) according to any one of claims 1 to 6, wherein, during a start phase of one of the first or second engines (1, 2), the first electric machine (30, 40) and/or the second electric machine (32, 42) drive the gas generator (12, 22) of said first or second engine (1, 2) without driving the free turbine (11, 21), and after the start phase, the free turbine (11, 21) of said first or second engine (1, 2) drives one of the first electric machine (30, 40) or second electric machine (32, 42) in order to generate electrical energy, the first electric machine (30, 40) or second electric machine (32, 42) generating electrical energy being able to transmit electrical energy to the other of the first or second electric machines coupled only to the gas generator (12, 22).

9. The method according to claim 8, wherein one of the first or second engines is able to operate alone, the other engine then operating in a standby mode while being driven at idle by the first or second electric machine (30, 40, 32, 42), the engine (1, 2) operating in the standby mode being restarted by the first electric machine (30, 40) at least during a quick restart phase.
